# EUROPÄISCHE PATENTSCHRIFT

(11) **EP 0 791 318 B1**
(45) Veröffentlichungstag und Bekanntmachung des Hinweises auf die Patenterteilung: **15.05.2002**
(21) Anmeldenummer: 97102242.1
(22) Anmeldetag: 13.02.1997
(51) Int. Cl.: A47F 5/08, F16B 21/18, F16B 12/20

(54) **Steckverbindung zum Befestigen von Gegenständen an Wänden**
Plug-in connection for fastening articles to walls
Dispositif de connexion enfichable pour la fixation d'objets à des murs

(30) Priorität: 23.02.1996 DE 29603111 U; 12.06.1996 DE 19623366
(43) Veröffentlichungstag der Anmeldung: 27.08.1997
(73) Patentinhaber: Riediger, Bruno, 87730 Grönenbach-Zell (DE)
(72) Erfinder: Riediger, Bruno, 87730 Grönenbach-Zell (DE)
(74) Vertreter: Hübner, Hans-Joachim, Dipl.-Ing.

(56) Entgegenhaltungen:
- EP-A- 0 501 039
- FR-A- 1 293 293
- FR-A- 2 234 744
- FR-A- 2 604 813
- US-A- 2 894 425

## Beschreibung

Die Erfindung betrifft eine Steckverbindung zum Befestigen von Gegenständen an Wänden und Gestellen. Im Laden- und Messebau sowie in der Wohnungsausstattung werden einfache Befestigungssysteme benötigt, um Holzteile, wie Regalbretter, Schrankteile, Zwischenwandplatten, Lichtblenden, Ablagen, Konsolen und dergl. an Wänden, Rahmen und Traggestellen haltern zu können. Bekannte Stecksysteme verwenden Schienen oder Platten mit Schlitzen oder schlitzartigen Öffnungen, in die z.B. Konsolenträger einhängbar sind. Abgesehen von dem erheblichen Materialaufwand sind solche Schienen optisch wenig ansprechend, da sie auch nach Anbringen der Gegenstände sichtbar bleiben. Unsichtbare Befestigungen von Gegenständen an Wänden lassen sich auch durch Schraubbefestigungen realisieren. Die Montage der Gegenstände ist aber recht zeitaufwendig.

FR 2 234 744 A beschreibt eine Steckverbindung, die jedenfalls keinen Stützabschnitt des Adapters offenbart, der zum Zentrierabschnitt der Buchse komplementär ist und dessen Länge kleiner als die des Zentrierabschnitts der Buchse ist. Eine Steckverbindung gemäß dem Oberbegriff des Anspruchs 1 ist in EP 0 501 039 A verbeschrieben.

Aufgabe der Erfindung ist es eine Steckverbindung der eingangs genannten Art mit einer Vorzentrierwirkung zu versehen, hinsichtlich der Wackelfreiheit zu verbessern und datür zusorgen, daß in der Einsteckposition ein axiales Schiebespiel zwischen Adapter und Buchse ausgeschlossen ist.

Diese Aufgabe wird erfindungsgemäß durch die Merkmale des Anspruchs 1 gelöst.

Die Buchse läßt sich auf verschiedene Weise in einer Wand befestigen, insbesondere einschrauben. Der Adapter braucht dann lediglich in die Buchse eingeschoben zu werden, wobei eine selbsttätige Arretierung erfolgt, da die Rastmittel den Adapter in der Einsteckposition gegen die Stirnfläche der Buchse ziehen. Zum Lösen des Adapters muß also erst diese axiale Haltekraft der Rastmittel überwunden werden, um den Adapter herausziehen zu können. Da die Rastmittel über die Umfangskontur des vorderen Einsteckabschnittes des Adapters vorstehen, würde eine nichtgestufte Innenkontur der Buchse das Einführen des Adapters problematisch machen. Erfindungsgemäß ist der innere Umfang des Zentrierabschnittes der Buchse so viel größer als der Einsteckabschnitt des Adapters einschließlich der dort vorgesehenen Rastmittel, daß dieser Zentrierabschnitt ein Einfahren des Adapters mit viel Radialspiel und ohne Betätigung der Rastmittel erlaubt. Da die Halterungen der Adapter bzw. die mit dem Adapter einstückig ausgebildeten Gegenstände beim Montagevorgang die Einstecklöcher der Buchse verdecken, wird dank deren Zentrierabschnittes eine selbsttätige Ausrichtung des Adapters zur Buchse bewirkt und beim weiteren Einschieben des Adapters findet dann eine Feinzentrierung des Einsteckabschnittes des Adapters im Führungsabschnitt der Buchse statt. Diese Zweistufigkeit des Montagevorganges erlaubt enge Schiebesitzpassungen der Adapterabschnitte in den Buchsenabschnitten, deren Durchmesser Differenzen in der Größenordnung von 0,1 mm liegen. Damit wird eine absolut wackelfreie Verbindung des Adapters in der Buchse sichergestellt.

Als Rastmittel können federnd gelagerte Kugeln oder Zapfen im Einsteckabschnitt dienen, die hinter den am Ende des Führungsabschnittes der Buchse gebildeten Absatz einrasten, und zwar so, daß die radial nach außen wirkende Federkraft der Rastmittel dank der Wölbung der Rastkugeln in eine axiale Zugkraft umgewandelt wird.

Eine demgegenüber bevorzugte Alternative besteht erfindungsgemäß darin, daß der Einsteckabschnitt des Adapters über den Führungsabschnitt der Buchse in Einsteckrichtung vorsteht und im Bereich des Endabsatzes des Führungsabschnittes eine Ringnut aufweist, in der ein O-Ring aus elastisch verformbarem Material gelagert ist, daß der Endabsatz des Führungsabschnittes in einer, die Ringnut enthaltenden Radialebene liegt, und daß der Außenumfang des in die Ringnut eingesetzten O-Ringes größer als der Innenumfang des Führungsabschnittes der Buchse ist. Mit dieser Weiterbildung wird bewirkt, daß der O-Ring beim Einfahren in den Führungsabschnitt der Buchse radial einwärts gedrückt und so verformt wird, daß beim weiteren Einschieben des Adapters in die Buchse ein erheblicher Reibungswiderstand überwunden werden muß. Kurz vor Erreichen der Einsteckposition tritt der O-Ring aus der Buchse bzw. deren Führungsabschnitt heraus und kann sich entspannen, wodurch eine axiale Zugkraft auf den Adapter ausgeübt wird, aufgrund deren der Adapter in die Einsteckposition schnappt, die durch Anlage der Anschlagfläche des Adapters an der Stirnseite der Buchse definiert ist. Diese Zugkraft bleibt in dieser Einsteckposition erhalten, so daß wackelfreie Befestigungen von Gegenständen gewährleistet sind. Diese ständig aufrecht erhaltende Zugkraft in axialer Richtung wird erfindungsgemäß bewirkt, in dem der O-Ring nur zum Teil und insbesondere etwa nur mit seiner halben Breite aus der Buchse austritt. In der Einsteckposition des Adapters beträgt der außerhalb des Führungsabschnittes der Buchse liegende Bereich der Ringnut zwischen 50 % und 70 % der Nutbreite.

Im einfachsten Fall sind alle Abschnitte des Adapters und der Buchse kreisförmig konturiert und vorzugsweise ist zwischen dem Adapter und der Buchse ein Verdrehungsschutz vorgesehen. Dieser kann im einfachsten Fall aus einem von der Anschlagfläche des Adapters vorstehenden Stift bestehen, der in eine komplementäre Ausnehmung in der Stirnfläche der Buchse oder eines Ringflansches der Buchse eingreift. Anstelle einer Ausbildung der Buchse und des Adapters in Form von Drehteilen, liegt es im Rahmen der Erfindung die Buchse und den Adapter unrund insbesondere polygonal mit gerundeten Ecken auszubilden. Solche Polygonalprofile sind genormt. Die Umfangskonturen setzen sich abwechselnd aus Kreisen eines kleineren und eines größeren Durchmessers zusammen, wobei die Durchmesserunterschiede sehr gering sein können, so daß die Querschnitte fast kreisförmig erscheinen, dennoch aber eine Relativverdrehung ausschließen.

Anhand der Zeichnung, die Ausführungsbeispiele der Erfindung darstellt, wird die Erfindung näher beschrieben.

Es zeigt:
- FIG.1: eine dreidimensionale Ansicht einer Buchse und eines Adapters, die zusammen eine Steckverbindung bilden,
- FIG.2: Buchse und Adapter ähnlich FIG. 1 in Seitenansicht,
- FIG.3: eine Seitenansicht von Buchse und Adapter mit Verdrehungsschutz,
- FIG.4: eine montierte Steckverbindung im Querschnitt,
- FIG.5: eine doppelseitige Steckverbindung in einer Wand,
- FIG.6: die Befestigung einer Buchse in einer Wand mittels eines Schraubwiderlagers in Seitenansicht und in Vorderansicht,
- FIG.7: eine in einer Dübelschraube integrierte Buchse mit zugehörigem Dübel,
- FIG.8: eine Vorsatzwand mit an dieser befestigen Adaptern,
- FIG.9: einen Adapter mit einer einstückigen Halterung für eine Konsole,
- FIG.10: einen Adapter mit einem einstückigen Konsolenträger,
- FIG.11: eine Seitenansicht eines Halters in Form eines sogenannten Schrägabhängers für Warenpräsentation mit einstückig angeformtem Adapter und Drehsicherung,
- FIG. 12: einen geraden Arm mit integriertem Adapter, z.B. für Garderoben,
- FIG.13: einen Adapter mit Drahtbügel zum Aufhängen von Blisterpackungen und
- FIG.14: eine abgewinkelte Aufhängevorrichtung mit integriertem Adapter.

Eine allgemein mit 12 bezeichnete Buchse hat einen konstanten Außendurchmesser und eine inneren kreiszylindrischen Zentrierabschnitt 14 sowie einen anschließenden ebenfalls kreiszylindrischen Führungsabschnitt 16, der aber auf geringerem Durchmesser liegt. Dazwischen befindet sich ein konischer Übergangsabschnitt 18. Die Buchse 12 hat an seinem, dem Zentrierabschnitt 14 zugeordnetem Ende einen Ringflansch 20 in welchem zwei einander diametral gegenüberliegende Durchgangslöcher 21 angeordnet sind. Diese dienen zur Aufnahme von entsprechenden Stiften eines Handwerkzeuges, um die mit durchgehendem Außengewinde versehene Buchse 12 in eine Bohrung einer Wand einschrauben zu können.

Der Adapter 22 besteht aus einem Bolzen 23, der einen vorderen kreiszylindrischen Einsteckabschnitt 24 und einen daran nach hinten anschließenden Stützabschnitt 26 aufweist. An diesen schließt sich ein Ringflansch 28 an, der rückseitig zur Befestigung von einer Vielzahl von Halterungen dient. Der Stützabschnitt 26 ist im Durchmesser größer als der Einsteckabschnitt 24 und entspricht mit seinem Außendurchmesser dem Innendurchmesser des Zentrierabschnittes 14 der Buchse 12. Der Einsteckabschnitt 24 paßt in gleicher Weise in den Führungsabschnitt 16. Die Länge des Stützabschnittes 26 ist etwas geringer als die Länge des Zentrierabschnittes 14 der Buchse 12. Die Länge des Einsteckabschnittes 24 des Adapters 22 übertrifft diejenige des Führungsabschnittes 16 der Buchse 12. In einem Ausführungsbeispiel hat der Zentrierabschnitt 14 einen Innendurchmesser von 12,00 mm und der Stützabschnitt 26 des Adapters 22 hat einen zugehörigen Außendurchmesser von 11,90 mm. Der Durchmesserunterschied beträgt also nur 0,1 mm. Der Innendurchmesser des Führungsabschnittes 16 der Buchse 12 ist 11,00 mm und der zugehörige Außendurchmesser des Einsteckabschnittes 24 ist 10.90 mm. Auch hier besteht somit ein Durchmesserunterschied von 0,10 mm.

Wenn der Adapter 22 in die Buchse 12 eingefahren wird, so kommen die Ringflansche 20, 28 zur stirnseitigen Anlage. In dieser Einsteckposition ragt der Einsteckabschnitt 24 des Adapters 22 aus der Buchse 12 heraus, wobei eine Ringnut 30 des Einsteckabschnittes 24 in der stirnseitigen Begrenzungsebene des Führungsabschnittes 16 der Buchse 12 liegt. Das stirnseitige Einsteckende des Einsteckabschnittes 24 weist eine konische Schrägfläche 32 auf.

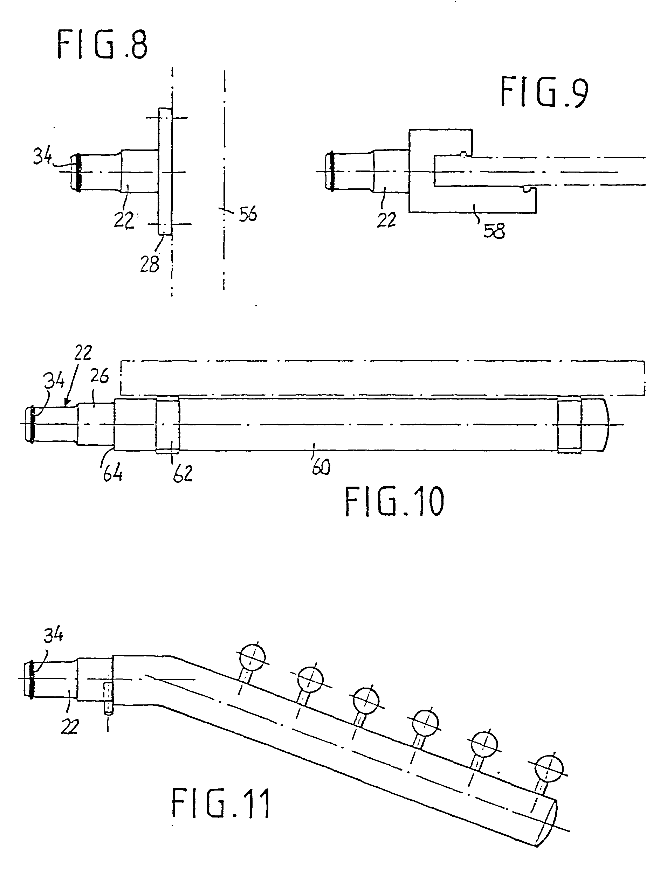

In der Ringnut 30 wird ein O-Ring 34 (Figuren 8 - 11) aus Gummi, Federdraht oder dergleichen gehaltert, dessen Außendurchmesser im montierten Zustand des Ringes größer als der Innendurchmesser des Führungsabschnittes 16 der Buchse 12 ist. Der O-Ring ist jedoch bis auf den Innendurchmesser des Führungsabschnittes 16 der Buchse 12 komprimierbar, wobei allerdings beim Einstecken des Adapters 22 in die Buchse 12 ein gewisser Axialdruck ausgeübt werden muß, um die Haftreibung des O-Ringes 34 im Führungsabschnitt 16 zu überwinden. Der Außendurchmesser des in die Ringnut 30 eingesetzten O-Ringes 34 ist geringer als der Innendurchmesser des Zentrierabschnittes 14 der Buchse 12, so daß ein leichtes anfängliches Einfahren des Einsteckabschnittes 24 des Adapters 22 in den Zentrierabschnitt 14 der Buchse 12 mit gewissem Radialspiel gewährleistet ist. Dabei findet eine Vorzentrierung statt, die dann aufgrund der konischen Übergangsschräge 18 unter gleichzeitiger Kompression des O-Ringes zur Vollzentrierung führt. Kurz bevor die beiden Ringflansche 20, 28 zur Anlage kommen, tritt der O-Ring 34 aus dem Führungsabschnitt 16 der Buchse 12 aus und bewirkt aufgrund seiner Expansion eine Radial-Axial-Kraftumsetzung, so daß der Adapter 22 von selbst in seine Einsteckendposition gezogen wird und in dieser Stellung auch vorgespannt bleibt. Unmittelbar benachbart des Ringflansches 28 ist in den Stützabschnitt 26 des Adapters 22 ein Stift 36 eingesetzt, dem eine entsprechende Ausnehmung 38 an der Frontseite des Ringflansches 20 der Buchse 12 zugeordnet ist. Der Stift 36 tritt also in der Kupplungsstellung in die Ausnehmung 38 ein, womit ein Verdrehungsschutz zwischen Adapter 22 und Buchse 12 erreicht wird. Alternativ könnten im Ringflansch 28 auch Axialstifte vorgesehen sein, die in die Montagelöcher 21 des Ringflansches 20 der Buchse 12 eintreten.

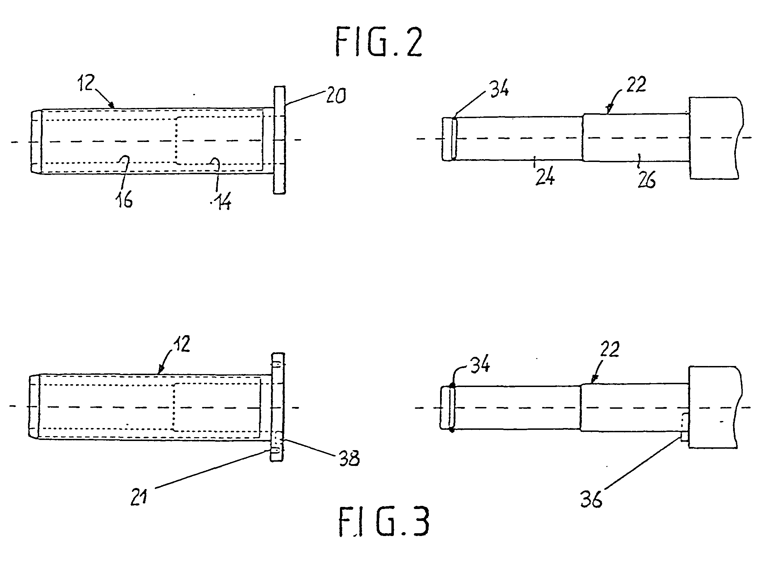

Figur 2 zeigt die Buchse 12 und den Adapter 22 jeweils in Seitenansicht, wobei hier eine Drehsicherung fehlt. Wenn z.B. ein zu halternder Gegenstand zwei an ihm befestigte Adapter 22 aufweist, wird eine Drehsicherung nicht benötigt.

Figur 3 zeigt die beiden Teile dagegen mit der Drehsicherung 36, 38.

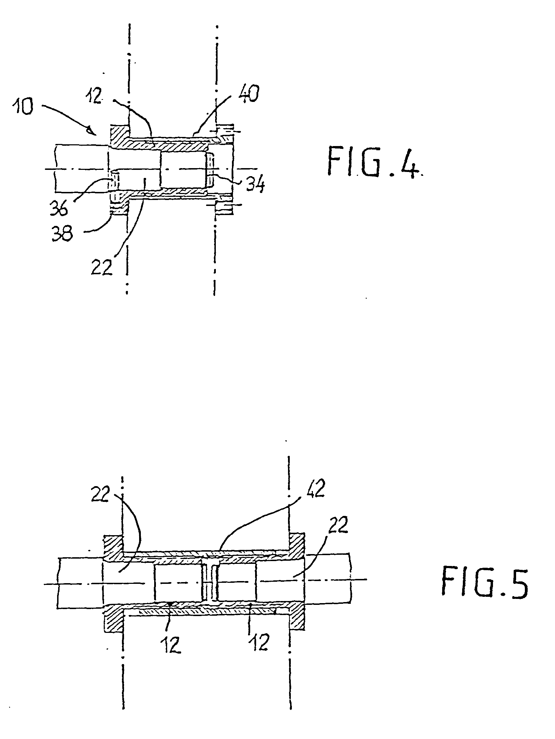

FIG. 4 veranschaulicht die Befestigung der Buchse 12 in einer strichpunktiert dargestellten Wand, wobei auf das Außengewinde der Buchse 12 eine Widerlagerbuchse 40 mit Innengewinde von der anderen Wandseite her aufgeschraubt ist.

FIG. 5 erläutert eine Wand, die von beiden Seiten her mit Buchsen 12 ausgestattet ist. Dazu wird in eine entsprechende Bohrung der Wand zuerst eine Gewindehülse 42 eingeschoben, in die dann von beiden Seiten her die Buchsen 12 eingeschraubt werden. Die Wand muß eine solche Dicke haben, daß die anschließend von beiden Seiten eingesetzten Adapter 22 einander noch nicht berühren.

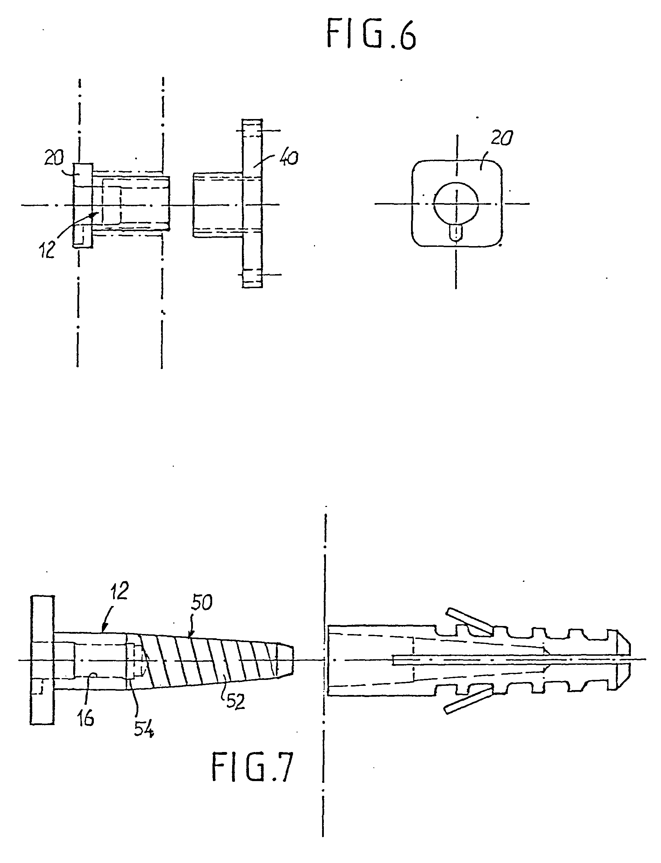

FIG. 6 zeigt eine Ausführung ähnlich FIG. 4 in Seitenansicht, wobei der Ringflansch 20 der Buchse 12 quadratisch ausgebildet ist und in eine entsprechende Ausfräsung der Wand eingepaßt ist. Auf das Außengewinde der Buchse 12 wird dann die Flanschhülse 40 aufgeschraubt und festgezogen.

In einer nicht dargestellten Abwandlung zu FIG. 6 kann die Wand auch lediglich mit einem Sackloch ausgestattet sein, in das die Buchse 12 mit einem Schneidgewinde eingeschraubt wird.

FIG: 7 veranschaulicht eine Schraube 50, die man sich aus einer Buchse 12 und einem einstückig anschließenden, konischen Gewindekörper 52 zusammengesetzt vorstellen kann. An den Führungsabschnitt 16 der Buchse 12 schließt sich hier ein Erweiterungsabschnitt 54 an, der zur Aufnahme des O-Ringes 34 dient und der in einem Sachloch endet. Die Schraube 50 kann in einen Mauerdübel eingeschraubt werden und ihre Buchse 12 dient dann zur Steckaufnahme des Adapters 22.

FIG. 8 zeigt einen Adapter 22, dessen Ringflansch 28 an einer Schiene 56 oder Vorsatzwand 56 angeschraubt ist. Im Fall einer Schiene sind mindestens zwei Adapter 22 und im Fall einer Vorsatzwand 56, vier oder mehr Adapter 22 angeschraubt, denen entsprechende Buchsen in der Tragwand zugeordnet sind.

Alternativ ist es natürlich möglich, den Ringflansch 28 bei einem Adapter 22 wegzulassen und anstelle dessen einen Gewindebolzen vorzusehen mit dem der Adapter direkt z.B. in die Schmalseite einer Konsole eingeschraubt wird. Dazu liegt es ausdrücklich im Rahmen der Erfindung, in einem der beiden Abschnitte des Adapters 22 gegenüberliegende Abflachungen einzufräsen, um einen Gabelschlüssel ansetzen zu können.

FIG. 9 zeigt den Adapter 22, der anstelle des Ringflansches 28 ein gabelförmiges Formteil 58 trägt, in das eine Glasplatte oder ein Konsolenbrett eingeschoben und mittels nicht dargestellter Klemmschrauben befestigt werden kann.

Der Adapter 22 gemäß FIG. 10 ist einstückig mit einem zylindrischen Verlängerungsarm 60 ausgestattet. Zwei solcher Arme 60 werden dann an einer Tragwand in horizontaler Ausfluchtung mittels der Adapter 22 befestigt, um eine mit Gabelschuhen 62 versehene Konsole abzustützen. Dieser Adapter 22 zeigt, daß eine schmale Ringschulter 64 am Ende des Stützabschnittes 26 als Anlagefläche für die Buchse 22 ausreicht. Diese Stützfläche 64 könnte sogar durch den halternden Gegenstand selbst gebildet werden, wenn bei der Herstellung der genaue Abstand zwischen dieser Ringschulter 64 und dem O-Ring 34 eingehalten wird.

FIG. 11 zeigt einen Adapter mit einstückig angeformtem Schrägarm, der eine Anzahl Kugelzapfen aufweist, zwischen denen jeweils Verkaufspackungen aufgehängt werden können.

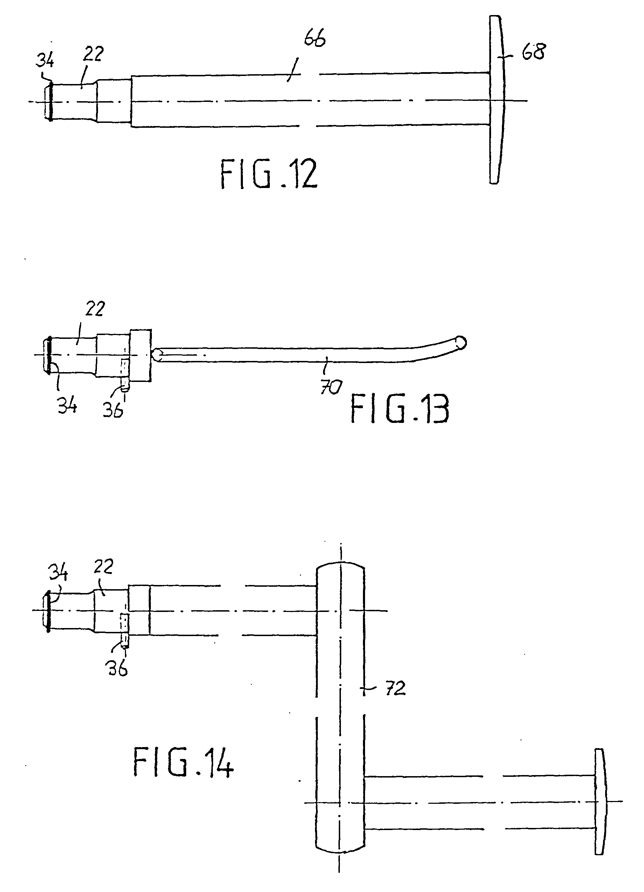

FIG. 12 zeigt einen Tragarm 66 mit koaxialem Adapter 22 an einem Ende und einer Abschlußscheibe 68 am anderen Ende. Dieser Gegenstand dient z.B. als Garderobenausstattung.

FIG. 13 zeigt einen Adapter 22, der mit einem Drahtbügel 70 verbunden ist, welcher zum Aufhängen von Blisterpackungen dient.

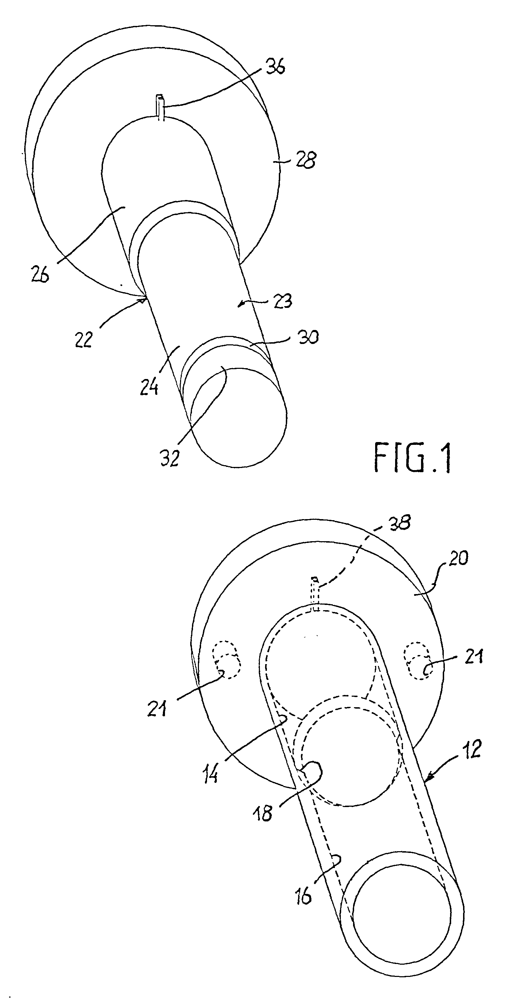

FIG. 14 zeigt schließlich einen Tragwinkel 72, der zum Befestigen an einer Tragwand mit dem Adapter 22 ausgestattet ist. Die Figuren 13 und 14 zeigen den Adapter 22 jeweils mit Radialstift 36 als Drehschutz, dem in der Buchse eine komplementäre Ausnehmung 38 wie in FIG. 1 zugeordnet ist.

## Patentansprüche

1. Steckverbindung zum Befestigen von Gegenständen an Wänden und Gestellen, mit einer, in einem Loch der Wand zu befestigenden Buchse (12) und einem in diese einsteckbaren Adapter (22), der Halterungs- oder Verbindungsmittel (28, 58, 60) für den zu halternden Gegenstand aufweist, wobei der Adapter (22) eine Anschlagfläche (28, 64) aufweist, die in der Einsteckposition des Adapters (22) stirnseitig an der Buchse (12) anliegt, und im Inneren der Buchse (12) ein zylindrischer Führungsabschnitt (16) ausgebildet ist und der Adapter (22) einen zylindrischen Bolzen (23) mit einem vorderen Einsteckabschnitt (24) aufweist und der Einsteckabschnitt (24) zum Führungsabschnitt (16) querschnittsmäßig komplementär ist, wobei am Einsteckabschnitt (24) des Adapters (22) elastische Rastmittel (30, 34) vorgesehen sind, die in der Einsteckposition des Adapters (22) hinter einem Absatz am Führungsabschnitt (16) der Buchse (12) verrasten, **dadurch gekennzeichnet, daß** dem Führungsabschnitt (16) der Buchse (12) in Einsteckrichtung ein umfangsmäßig größerer koaxialer Zentrierabschnitt (14) vorgeschaltet ist, sich an den Einsteckabschnitt (24) des Adapters (22) zum Halterungsmittel (28) hin ein koaxialer Stützabschnitt (26) anschließt, dessen Umfang größer als der des Einsteckabschnittes (24) und zum Zentrierabschnitt (14) der Buchse (12) komplementär ist und dessen Länge kleiner als die des Zentrierabschnittes (14) ist, wobei der Einsteckabschnitt (24) mit dem Führungsabschnitt (16) einerseits und der Stützabschnitt (26) mit dem Zentrierabschnitt (14) andererseits Schiebesitzpassungen aufweisen, und daß sich die Rastmittel (30, 34) in der Einsteckposition des Adapters (22) hinter dem am Ende des Führungsabschnittes (16) der Buchse (12) gebildeten Absatz axial abstützen und zwar so, daß die radial nach außenwirkende Federkraft der Rastmittel dank ihrer Wälbung in eine axiale Zugkraft umgewandelt wird, die den Adapter (22) mit der Anschlagfläche (28, 64) axial gegen die Buchse (12) zieht.

2. Steckverbindung zum Befestigen von Gegenständen an Wänden und Gestellen nach Anspruch 1, **dadurch gekennzeichnet, daß** der Einsteckabschnitt (24) des Adapters (22) über den Führungsabschnitt (16) der Buchse (12) in Einsteckrichtung vorsteht und im Bereich eines Endabsatzes des Führungsabschnittes (16) eine Ringnut (30) aufweist, in der ein O-Ring (34) aus elastisch verformbarem Material gelagert ist, daß der Endabsatz des Führungsabschnittes (16) in einer, die Ringnut (30) enthaltenden Radialebene liegt, und daß der Außenumfang des in die Ringnut eingesetzten O-Ringes (34) größer als der Innenumfang des Führungsabschnittes (16) der Buchse (12) ist.

3. Steckverbindung nach Anspruch 1 oder 2, **dadurch gekennzeichnet, daß** der Außenumfang des O-Ringes (34) kleiner als der Innenumfang des Zentrierabschnittes (14) der Buchse (12) ist.

4. Steckverbindung nach einem der Ansprüche 1 bis 3, **dadurch gekennzeichnet, daß** alle Abschnitte (14, 16, 24, 26) des Adapters (22) und der Buchse (12) kreisförmig konturiert sind.

5. Steckverbindung nach Anspruch 4, **dadurch gekennzeichnet, daß** zwischen Adapter (22) und Buchse (12) ein Verdrehungsschutz (36, 38) besteht.

6. Steckverbindung nach Anspruch 5, **dadurch gekennzeichnet, daß** der Adapter (22) unmittelbar benachbart seiner Anschlagfläche (64) einen Stift (36) oder Vorsprung aufweist, dem eine komplementäre Ausnehmung (38) in der Stirnfläche der Buchse (12) oder eines Ringflansches (20) der Buchse (12) zugeordnet ist.

7. Steckverbindung nach einem der Ansprüche 1 bis 6, **dadurch gekennzeichnet, daß** die Buchse (12) ein äußeres Schraubgewinde und am Einsteckende einen Ringflansch (20) aufweist, der stirnseitige Montagelöcher (21) für ein Werkzeug besitzt und daß wenigstens einem dieser Löcher (21) ein axialer Stift zugeordnet ist, der von der Anschlagfläche (64) des Adapters (22) vorspringt und in das Montageloch (21) paßt.

8. Steckverbindung nach einem der Ansprüche 1 bis 3, **dadurch gekennzeichnet, daß** die Querschnitte der Abschnitte (14, 16, 24, 26) des Adapters (22) und der Buchse (12) unrund, insbesondere polygonal mit gerundeten Ecken ausgebildet sind.

9. Steckverbindung nach einem der Ansprüche 1 bis 8, **dadurch gekennzeichnet, daß** die Buchse (12) Bestandteil eines in einen Dübel einschraubbaren Schraubkörpers (50) ist, wobei sich an den Führungsabschnitt (16) der Buchse (12) ein Absatz mit einem Erweiterungsabschnitt (54) anschließt, der in einem Sackloch endet.

10. Steckverbindung nach einem der Ansprüche 1 bis 9, **dadurch gekennzeichnet, daß** mindestens zwei Buchsen (12) an einer Tragschiene oder Tragplatte angeordnet sind, die Befestigungslöcher für Randbefestigungsschrauben aufweist.

11. Steckverbindung nach einem der Ansprüche 1 bis 10, **dadurch gekennzeichnet, daß** der Adapter (22) eine Anschlagfläche (64) in Form einer Ringschulter aufweist, an die sich der mit dem Adapter (22) verbundene Gegenstand oder die Halterungs- oder Verbindungsmittel dafür anschließen.

12. Steckverbindung nach einem der Ansprüche 1 bis 11, **dadurch gekennzeichnet, daß** zwischen dem Zentrierabschnitt und dem Führungsabschnitt (16) der Buchse (12) eine sich verjüngende konische Übergangsfläche (18) ausgebildet ist.

## Claims

1. A plug-type connection for mounting objects on walls and frames, with a bushing (12) that is mounted in a hole in the wall, and with an adapter (22) that can be inserted into said bushing and contains holding or connecting means (28, 58, 60) for the object to be mounted, wherein the adapter (22) contains a limit stop surface (28, 68) that adjoins the end face of the bushing (12) in the inserted position of the adapter (22), wherein a cylindrical guide section (16) is arranged in the interior of the bushing (12), wherein the adapter (22) contains a cylindrical bolt (23) with a front plug-in section (24), wherein the plug-in section (24) is realized complementary to the guide section (16) with respect to its cross section, and wherein elastic snap-in means (30, 34) that engage behind a shoulder on the guide section (16) of the bushing (12) in the inserted position of the adapter (22) are provided on the plug-in section (24) of the adapter (22), **characterized by** the fact that a coaxial centering section (14) of greater circumference is provided in front of the guide section (16) of the bushing (12) viewed in the plug-in direction, wherein a coaxial support section (26) that extends toward the holding means (28) is situated adjacent to the plug-in section (24), wherein the support section has a greater circumference than the plug-in section (24) and is realized complementary to the centering section (14) of the bushing (12), wherein the length of said support section is shorter than that of the centering section (14), and wherein the plug-in section (24) with the guide section (16) on one hand and the support section (26) with the centering section (14) on the other hand contain sliding seat fittings, and by the fact that the snap-in means (30, 34) are axially supported behind the shoulder formed on the end of the guide section (16) of the bushing (12) in the inserted position of the adapter (22), namely such that the spring force of the snap-in means which acts radially outward is converted into an axial tensile force due to its curvature, wherein said tensile force axially pulls the adapter (22) against the bushing (12) with the limit stop surface (28, 64).

2. A plug-type connection for mounting objects on walls and frames according to claim 1, **characterized by** the fact that the plug-in section (24) of the adapter (22) protrudes over the guide section (16) of the bushing (12) in the plug-in direction, wherein said plug-in section contains an annular groove (30) in which an O-ring (34) of an elastically deformable material is arranged in the region of an end shoulder of the guide section (16), by the fact that the end shoulder of the guide section (16) lies in a radial plane that contains the annular groove (30), and by the fact that the outer circumference of the O-ring (34) that is inserted into the annular groove is greater than the inner circumference of the guide section (16) of the bushing (12).

3. A plug-type connection according to claim 1 or 2, **characterized by** the fact that the outer circumference of the O-ring (34) is smaller than the inner circumference of the centering section (14) of the bushing (12).

4. A plug-type connection according to one of claims 1-3, **characterized by** the fact that all sections (14, 16, 24, 26) of the adapter (22) and the bushing (12) have a circular contour.

5. A plug-type connection according to claim 4, **characterized by** the fact that a mechanism (36, 38) is provided for preventing the adapter (22) and the bushing (12) from turning relative to one another.

6. A plug-type connection according to claim 5, **characterized by** the fact that the adapter (22) contains a pin (36) or projection directly adjacent to its limit stop surface (64), wherein a complementary recess (38) in the end face of the bushing (12) or of an annular flange (20) of the bushing (12) is assigned to said pin or projection.

7. A plug-type connection according to one of claims 1-6, **characterized by** the fact that the bushing (12) contains an external thread and is provided with an annular flange (20) on the plug-in end, wherein the end face of the annular flange contains mounting holes (21) for a tool, and by the fact that an axial pin is assigned to at least one of these holes (21), wherein said axial pin protrudes from the limit stop surface (64) of the adapter (22) and fits into the mounting hole (21).

8. A plug-type connection according to one of claims 1-3, **characterized by** the fact that the cross sections of the sections (14, 16, 24, 26) of the adapter (22) and the bushing (12) are not realized circularly, in particular, polygonally with rounded edges.

9. A plug-type connection according to one of claims 1-8, **characterized by** the fact that the bushing (12) forms part of a screw body (50) that can be screwed into a dowel, wherein a shoulder with a widened section (54) that ends in a pocket hole is situated adjacent to the guide section (16) of the bushing (12).

10. A plug-type connection according to one of claims 1-9, **characterized by** the fact that at least two bushings (12) are arranged on a carrier rail or carrier plate that is provided with mounting holes for edge mounting screws.

11. A plug-type connection according to one of claims 1-10, **characterized by** the fact that the adapter (22) contains a limit stop surface (64) in the form of an annular shoulder, wherein the object connected to the adapter (22) or the holding or connecting means for said object are situated adjacent to this annular shoulder.

12. A plug-type connection according to one of claims 1-11, **characterized by** the fact that a conically tapered transition surface (18) is formed between the centering section and the guide section (16) of the bushing (12).

## Revendications

1. Prise pour la fixation d'objets sur des murs ou des bâtis, avec un manchon (12) à fixer dans un trou du mur et un adaptateur (22) pouvant être branché dans ce manchon (22), qui présente des moyen de maintien ou de liaison (28, 58, 60) pour l'objet à maintenir, l'adaptateur (22) présentant une surface de butée (28, 64) qui, en position de branchement de l'adaptateur (22) a sa face frontale sur le manchon (12) et qu'à l'intérieur du manchon (12), une section de guidage cylindrique (16) est formée et que l'adaptateur (22) présente un goujon cylindrique (23) avec une section de branchement à l'avant (24) et que la section de branchement (24) est complémentaire dans sa section transversale à la section de guidage (16), des moyens d'enclenchement élastiques (30, 34) étant prévus sur la section de branchement (24) de l'adaptateur (22), qui, en position de branchement de l'adaptateur (22) s'enclenchent derrière un talon sur la section de guidage (16) du manchon (12), **caractérisée en ce que**, devant la section de guidage (16) du manchon (12), dans le sens de branchement, une section de centrage (14) coaxiale plus importante en volume est pré-branchée, se raccorde à une section de soutien (26) coaxiale à la section de branchement (24) de l'adaptateur (22) dans le moyen de maintien (28), dont le volume est supérieur à celui de la section de branchement (24) et est complémentaire à la section de centrage (14) du manchon (12) et dont la longueur est inférieure à celle de la section de centrage (14), la section de branchement (24) présentant avec la section de guidage (16) d'une part et la section de soutien (26) avec la section de centrage (14) d'autre part des ajusteurs coulissants et que les moyens d'enclenchement (30, 34), en position de branchement de l'adaptateur (22), s'appuient dans le sens axial derrière le talon formé au bout de la section de guidage (16) du manchon (12), à savoir de manière à ce que la force de ressort agissant à l'extérieur dans le sens radial soit transformée grâce à leur bombement en une force axiale de traction qui tire l'adaptateur (22) avec la surface de butée (28, 64) dans le sens axial contre le manchon (12).

2. Prise pour la fixation d'objets sur des murs et des bâtis selon la revendication 1, **caractérisée en ce que** la section de branchement (24) de l'adaptateur (22) dépasse la section de guidage (16) du manchon (12) dans le sens de branchement et présente, dans le secteur d'un talon d'extrémité de la section de guidage (16), une gorge circulaire (30) qui est placée dans une bague en O (34) en matière élastique déformable, que le talon d'extrémité de la section de guidage (16) repose dans un plan radial contenant la gorge circulaire (30) et que le volume externe de la bague en O (34) insérée dans la gorge circulaire est supérieur au volume interne de la section de guidage (16) du manchon (12).

3. Prise selon la revendication 1 ou 2, **caractérisée en ce que** le volume externe de la bague en O (34) est inférieur au volume interne de la section de centrage (14) du manchon (12).

4. Prise selon une des revendications 1 à 3, **caractérisée en ce que** toutes les sections (14, 16, 24, 26) de l'adaptateur (22) et du manchon (12) ont un contour de forme circulaire.

5. Prise selon la revendication 4, **caractérisée en ce qu'**entre l'adaptateur (22) et le manchon (12) il y a une protection anti-torsion (36, 38).

6. Prise selon la revendication 5, **caractérisée en ce que** l'adaptateur (22) présente, directement à côté de sa surface de butée (64), une cheville (36) ou une avancée, à laquelle est associé un évidement complémentaire (38) dans la surface frontale du manchon (12) ou d'une bride annulaire (20) du manchon (12).

7. Prise selon une des revendications 1 à 6, **caractérisée en ce que** le manchon (12) présente un filetage extérieur et, à l'extrémité de branchement, une bride annulaire (20), qui possède, sur sa partie frontale, des trous de montage (21) pour un outil et qu'à au moins un de ces trous (21) est associée une cheville axiale, qui dépasse de la surface de butée (64) de l'adaptateur (22) et s'adapte au trou de montage (21).

8. Prise selon une des revendications 1 à 3, **caractérisée en ce que** les sections transversales des sections (14, 16, 24, 26) de l'adaptateur (22) et du manchon (12) ne sont pas de forme ronde, mais en particulier polygonales avec des angles arrondis.

9. Prise selon une des revendications 1 à 8, **caractérisée en ce que** le manchon (12) est partie intégrante d'un corps à vis (50) pouvant être vissé dans un goujon, un talon avec une section de prolongation (54) qui finit par un trou en cul-de-sac rejoignant la section de guidage (16) du manchon (12).

10. Prise selon une des revendications 1 à 9, **caractérisée en ce qu'**au moins deux manchons (12) sont placés sur un rail support ou un plateau support qui présente des trous de fixation pour des vis de fixation en bordure.

11. Prise selon une des revendications 1 à 10, **caractérisée en ce que** l'adaptateur (22) présente une surface de butée (64) sous la forme d'un épaulement circulaire, auquel se raccorde l'objet relié à l'adaptateur (22) ou le moyen de maintien ou de liaison de celui-ci.

12. Prise selon une des revendications 1 à 11, **caractérisée en ce qu'**entre la section de centrage et la section de guidage (16) du manchon (12), une surface de transition conique (18) allant en rétrécissant est formée.
